# EUROPEAN PATENT APPLICATION

(11) **EP 4 617 298 A1**
(43) Date of publication of application: **17.09.2025**
(21) Application number: 23887220.4
(22) Date of filing: 08.11.2023
(51) Int. Cl.: C08G 63/06, C08G 63/21, C08L 67/00, C10L 1/188, C10L 1/183, C10M 163/00

(54) **ADDITIVE, PROCESS FOR OBTAINING SAME, USE OF SAME, PRODUCT AND POLYMERIC COMPOSITION OR POLYMER**

(30) Priority: 11.11.2022 BR 102022023030; 07.11.2023 BR 102023023294
(71) Applicant: Dioveritá Mundi, LLC, Charlestown (KN); Intelligens 4 Pesquisa e Desenvolvimento S.A., 13069-310 Campinas, SP (BR)
(72) Inventor: NYHOLT, Albert, Ernesto, 13064-722 Campinas, SP (BR)
(74) Representative: Patentanwälte Olbricht Buchhold Keulertz
(86) International application number: PCT/BR2023/050376
(87) International publication number: WO 2024/098126

(57) **Abstract**

The present invention relates to an additive applicable to a material such as a polymeric composition or polymer, which imparts to said composition and its derived products properties such as dimensional stability, thermodynamic stability, and increased gas impermeability, among others. The invention further relates to a process for preparing said additive, as well as to its uses, and to products, polymeric compositions, and polymers comprising the same.

## Description

The present invention relates to an additive applicable to a material such as a polymeric composition or polymer, which enables it to confer on said composition or said polymer and the products derived therefrom dimensional stability, thermodynamic stability and increased impermeability to gases. It also refers to a process for the preparation of said additive, as well as its uses and products, polymeric compositions and polymers comprising the same.

### Description of Prior Art

Synthesized polymer resins often do not have the characteristics required to be used for certain applications. Therefore, since the beginning of the development of the polymer industry, other substances have been added to these materials in order to stabilize the material during and after processing and to modify the properties of the resins for use in a particular application.

These substances, called additives or modifiers, comprise any material added to a polymer for a specific application. The fact that polymers can accept a wide variety of additives is fundamentally important, not only to improve their physicochemical properties, but also for their visual appeal, allowing for a wide range of applications, both new applications and the replacement of traditional materials.

It is therefore important to recognize that there are two categories of additives, classified according to the way in which they interfere with the polymer to which they are added.

The first classification includes functional additives, which are generally physically dispersed in the polymer matrix and do not significantly affect the molecular structure of the polymer. They do not alter the chemical composition, at least substantially, of the polymer matrix to which the additive is added. They do not focus on altering mechanical properties, such as impact resistance, ductility, melting temperature and so on. Their main characteristic is to change the final behavior of the polymer without structural alteration.

A second classification is structural additives, which, unlike functional additives, can modify the physicochemical structure of the polymer to enhance the resulting compound's key physical properties, such as increased resistance, color variation, melting point, and others.

The type of additives and their characterization described is based on scientific knowledge, such as in the book "Aditiva 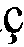 ão de Termoplásticos" by Marcelo Rebelo and Marco-Aurélio de Paoli, published by Artliber.

In recent decades, polymers have been increasingly in demand in an endless range of applications, such as, but not limited to: containers for solid and liquid consumption (bottles, packaging, jars, films, layers, carton packs, etc.), the construction industry, the automotive industry, the textile industry, medical equipment, soundproofing, machine parts in general, layers for application to products and equipment (whether in the form of a spray or pre-molded layer), paints, varnishes, among others.

In this context, one of the challenges associated with the use of polymers in various applications is their lack of atomic structural stability or insufficient covalent bonding. This instability is evidenced, for example, by the dimensional and thermodynamic limitations observed in current polymeric compounds.

Such limitations affect not only the manufacturing process of products based on these compounds, but also hinder their use in various applications where these characteristics are critical.

The first aspect is the problem of manufacturing products based on polymeric compounds with low dimensional and thermodynamic stability.

In general, products derived from polymeric compounds are manufactured through extrusion, injection molding, thermoforming, etc. processes, which involve high temperatures during the process. During cooling of the molded product after it has been removed from the mold, there is a shrinkage that can lead to loss of the dimensions originally sought due to deformation of the product while it is still hot, which is a serious problem and difficult to solve. In other words, at first glance, there is limited dimensional stability of the product in terms of its resistance to plastic deformation due to temperature.

Secondly, it is well known that traditional polymeric compounds do not have appreciable thermodynamic stability and are highly susceptible to energy transfer through their polymeric matrix. In other words, they allow thermal exchange between an external or internal surface, for example.

A polymer is composed of repeating monomers, which can have a linear, branched or network structure. Covalent bonds are responsible for maintaining the integrity of the polymer, linking its atoms, and secondary bonds connect groups of polymer chains to form the polymeric material, which can generate copolymers, which are polymers composed of two or more different types of monomers.

Despite being commonly represented in two-dimensional form, polymers have a three-dimensional structure. In general, each bond between the atoms in a polymer has a 109° inclination in relation to the next one, so that these chains can undergo twisting and stretching when forces or energies are applied, similar to the formation of crystalline structures.

The so-called thermoplastic polymers stand out. They can be classified as amorphous and/or crystalline polymers, which may have a linear or branched structure and, in general, soften when heated and harden when cooled. These polymers have a wide range of applications as structural components and/or as matrix components associated with other components, and these functions are influenced by characteristics such as degree of polymerization, type and concentration of additives, etc.

The most common types of thermoplastic polymers are polyethylene, polypropylene, polyamide, polycarbonate, polybutylene terephthalate, polyesters, among others.

In current commercial applications, such as the manufacture of food containers, it is known that the polymeric compounds usually used to manufacture these containers are not able to prevent the transfer of heat from the environment, so that the refrigeration of the product is often necessary and its consumption is conditioned to its constant refrigeration, or the consumer is forced to consume the product immediately, which is inefficient from an energy point of view and inconvenient from the point of view of commercial appeal.

Furthermore, other applications of polymeric compounds (construction industry, automotive industry, paper and cellulose industry, aerospace, textile industry, medical equipment, electro-electronic equipment, sound insulation, machine parts in general, layers for application to products and equipment - whether in the form of a spray or pre-molded layer, paints, varnishes, among others, are limited by the fact that such compounds are not able to prevent or substantially limit the transfer of energy through their structure.

Attempts to confer structural and thermodynamic stability to polymer composites can be seen in prior art. For example, document CN110861363 suggests the use of hollow microspheres added to a material between each TPU film and a substrate fiber layer to obtain a material with improved structural and thermal properties, and the prepared composite hollow microspheres exhibit compact hexagonal spatial distribution. However, these advantages are obtained through a complex composite treatment process which involves high costs, as well as requiring the alteration of the polymer's original characteristics, in this case the preparation of a thermoplastic polyurethane elastomer composite, which is not desirable in most of the aforementioned applications.

In another example, document CN107163171 proposes obtaining a material for use in construction, and suggests the use of a foaming agent introduced in the reaction process of cyanamide and ricinoleic acid, for foam formation to effectively promote the filling effect of aluminum dihydrogen phosphate in the polymer matrix and thus improve the structural stability strength of the finished product. The document in question suggests that the thermal insulation property of the final product is improved. However, what is proposed in this document is also relatively complex and involves additional production steps and changes the original characteristics of the base polymer.

In another example, document GB1105141 proposes an epoxy resin obtained from a mixture of polyglycidyl ether, castor oil and maleic anhydride. This document suggests resistance to thermal shock, although the main characteristic sought would be electrical insulation. As can be seen, this document does not suggest the relevant promotion of dimensional or thermal stability to the compound, nor does it alter the original characteristics of the base polymer.

In an example of a proposed gas-tightness solution, patent application CN213832857, where for a liquid carton containing cellulose, polymeric and aluminum layers, it is proposed to replace the aluminum layer. A polymeric layer is used to replace the aluminum layer.

In this case, the solution adopted by document CN213832857 was a mass balance, i.e., increasing the thickness/density of a layer that is polymer instead of aluminum. Eliminating aluminum is extremely important because of the production difficulties, the environmental impact both in production and the difficulty of recycling when applied to carton packs. This document proposes a solution that partly solves the aluminum problem, but from the perspective of heavier packaging, which translates into a higher CO² impact, for example. On the other hand, the proposed solution presents a minimum barrier to oxygen of 1.5g/m³, which is lower than the barrier itself that a carton containing aluminum promotes, which is 1.00002g/m³. Thus, the solution presented lies in changing the chemical composition and mass balance, allowing apparently satisfactory results, but lower than those of the current product and with a higher weight. Savings are made on one side, but money is spent on the other.

In short, the prior art solutions for improving the behavior of polymers, for example, work at the chemical level by altering chemical compositions.

So far, no solution has been presented that works and promotes improvements by altering the covalent bonds in the packing that guarantees the stability of the structures and electronic relationships of the material.

### Objectives of the Invention

One primary objective of the present invention is to provide a functional additive that enhances the dimensional and thermal stability of a polymer composition without altering the original properties of the base polymer.

A second objective of the present invention is to provide a functional additive that allows the creation of a compound comprising a thermal barrier characteristic, which prevents or substantially limits the transfer of energy along its structure.

A third objective of the invention is to provide an additive that can be used to obtain polymeric compounds with dimensional and thermodynamic stability suitable for use in multiple commercial and industrial applications, such as, but not limited to, containers and/or packaging for solids, semi-solids, and liquids (e.g., bottles, jars, films, plastic bags), in the construction, automotive, pharmaceutical, textile, aerospace, agricultural equipment, and pulp and paper industries (e.g., packaging paper, cups, boxes), as well as in electrical cables, semiconductors, batteries, medical equipment and containers, the PVC industry (e.g., pipes), soundproofing products and equipment, machine parts in general, etc. The additive may be applied in the form of layers to such products and equipment (e.g., as a spray or pre-molded layer), paints, varnishes, and other applications, including but not limited to automotive vehicles, aviation, spacecraft, residential and commercial buildings, and agricultural and industrial equipment.

A fourth objective of the present invention is to provide a process for obtaining an additive such as the one mentioned above.

A fifth objective of the invention is to provide a product with at least one portion that has adequate dimensional stability, thermal stability, gas impermeability and sound insulation, without significantly altering the chemical composition of a product and its mechanical properties, such as color, tensile strength, among others.

A sixth objective of the invention is to provide a product with at least one portion that has the characteristic of a thermal barrier, which prevents or substantially limits the transfer of energy along its structure.

A seventh object of the invention is to provide a product with at least one portion having a molecular structure with compact hexagonal packing.

An eighth object of the invention is to provide a product that promotes stability in the structures and electronic relationships of the material by altering covalent bonds, surface heterogeneous catalysis and atomic packing.

A ninth object of the invention is to provide an atomic arrangement which, through a dative covalent bond, has a blocking effect on the molecular agitation caused by energy transfer.

### Brief Description of the Invention

The objectives of the present invention are achieved through the embodiments described below.

In a first embodiment, an additive is provided that comprises:
- a fatty acid;
- a paramagnetic component;
- an anchoring substrate, and optionally
- a functional stabilizer.

In a preferred embodiment, the fatty acid is present in a concentration around 5% to about 80% by weight, relative to the total weight of the additive, more preferably, wherein the fatty acid is an unsaturated fatty acid that contains at least one hydroxyl group (OH) present away from the ends of the carbon chain, even more preferably, wherein the fatty acid has a hydroxyl group on the 12th carbon of the chain, preferably, wherein the fatty acid has an 18-carbon chain, more preferably, wherein the fatty acid is derived from castor oil.

In an embodiment, the fatty acid is ricinoleic acid.

In a preferred embodiment the paramagnetic component is present in a concentration of about 1% to about 30% by weight, relative to the total weight of the additive, more preferably wherein the paramagnetic component is any component capable of maintaining the valence shell of the target polymeric composition or polymer with a negative charge, even more preferably wherein the paramagnetic component is copper sulfate, sodium, strontium, magnesium, and titanium chloride.

In an embodiment, the paramagnetic component is titanium chloride.

In a preferred embodiment, the anchoring substrate is present in a concentration of about 20% to about 70% by weight, relative to the total weight of the additive, more preferably, wherein the anchoring substrate is a solid or liquid anchoring substrate, even more preferably, wherein the anchoring substrate is a glycerol monostearate (GMS), Polyamide 6 (PA 6), lercite (methyl 2-methypropenoate), tetrafluoroethylene, lignin, zinc oxide, silicone fluid, tributyl citrate, and calcium carbonate.

In an embodiment, the anchoring substrate is calcium carbonate and is in solid form.

In an alternative embodiment of the invention, the additive comprises, additionally, functional stabilizers, such as magnesium chloride, preferably in a concentration of about 5% to about 40% by weight, relative to the total weight of the additive.

In a preferred embodiment, the additive comprises a molecular structure with compact hexagonal packing and a negative electrostatic charge in the valence shell.

Said additive being for the addition of a polymeric composition or polymer which, in the appropriate proportions, guarantee the desired gas, light, and temperature barrier properties.

Due to its ability to generate thermal, gas and light barriers for countless products from various industry segments, its use will replace raw materials and various products whose extraction and production contribute to major environmental impacts. Currently, various segments of industry use aluminum-derived products for preserving food, medicines, etc., which would be directly replaced by the additive of the present invention with enhanced characteristics, replacing the need for aluminum products and, consequently, reducing the impacts on nature from their extraction and also reducing the energy consumption necessary for the production of all its derivatives.

Within the cold chain, which is widely used for food preservation in the global logistics chain, for refrigeration of warehouses, offices, companies, homes, etc., all without exception would benefit from the thermal barrier of additives applied to food packaging, protective films for building facades, companies, vehicles, containers for storage and international transportation, etc., reducing or eliminating the need to use compressors used for refrigeration.

The present invention therefore has significant environmental advantages over the products usually used.

When applied to cold or hot water pipes, whether in homes or businesses, it will allow the liquid to remain at its original temperature, reducing energy expenditure to maintain the desired temperature or even avoiding the waste of water in domestic installations caused by waiting for hot water to arrive when showering.

In one embodiment, the polymeric composition or polymer may be selected from Nylon, Kevlar, vinyl acetate polymer, polycarbonate (PVA), polymethyl methacrylate (PMMA), polyvinyl chloride (PVC), acetal (POM), polytetrafluoroethylene (PTFE), paper and cellulose, polyester, polyurethane, Celeron, phenolic, low-density polyethylene, high-density polyethylene, polypropylene, and other.

The additive as claimed herein may be in any form, such as, for example, in liquid, paste, spray, pellet form, or any other.

In a further embodiment of the present invention, a process for obtaining said additive is described, said process comprising the steps of:
a. Obtaining a mixture of fatty acid with a solvent to obtain a fatty acid with low entropy;
b. Obtaining a mixture containing the mixture of item (a) with the paramagnetic component to obtain the molecular structure of compact hexagonal packing and a negative electrostatic charge in the valence shell of the polymer molecules;
c. Obtaining a mixture containing the mixture of item (b) with the anchoring substrate to form the fixation carrier to the target polymer.

In a preferred embodiment, the process comprises the additional step of mixing the paramagnetic component with an anchoring substrate before the incorporation into the mixture obtained in item (a).

In a preferred embodiment, the process comprises additionally the step of:
d. Incorporating into the mixture obtained in the step (c) additional components, such as functional stabilizers, to adjust the final aesthetic characteristics of the additive (such as coloration).

In a preferred embodiment, the fatty acid to solvent ratio used in step (a) of the process, is between about 0.5:2 to about 4:0.5.

In a preferred embodiment, the solvent is selected from cyclohexanone, Ethoxyethanol, Methyl Acetate, ethyl acetate and sodium acetate trihydrate, or their mixtures . Even more preferably, the solvent is ethyl acetate.

In a preferred embodiment, the functional stabilizer is magnesium chloride, methylparaben, sodium stannate, and butylated hydroxytoluene.

In another preferred embodiment, the fixation carrier is selected from Polyamide 6 (PA 6), carboxylic acid, ethyl acetate, lercite, methyl 2-methylpropenoate, acetylsalicylic acid, tetrafluoroethylene, lignin, zinc oxide, and glycerol monostearate (GMS).

In an alternative embodiment, it is further described the additive obtainable or obtained by the process as herein described.

In a preferred embodiment, the additive é for use in a polymeric composition or polymer.

In one embodiment of the invention, are further described products that comprise the additive, which products comprise negative electrostatic charge in the valence shell.

In one embodiment of the invention, are also described polymeric compositions or polymers that comprise the additive, wherein said polymeric compositions or polymers comprise at least one portion having a molecular structure with surface heterogeneous catalysis.

In one embodiment, the polymeric composition or polymer may be selected from Nylon, Kevlar, vinyl acetate polymer, polycarbonate (PVA), polymethyl methacrylate (PMMA), polyvinyl chloride (PVC), acetal (POM), polytetrafluoroethylene (PTFE), cellulose (paper), polyester, polyurethane, Celeron, phenolic, low-density polyethylene, high-density polyethylene, polypropylene, and other.

Finally, in one embodiment of the invention, it is also described a material that comprises at least one portion simultaneously endowed with a dative valence layer and surface heterogeneous catalysis.

### Brief Description of the Drawings

The present invention will now be described in more detail with reference to an embodiment illustrated in the drawings. The figures show:
Figure 1 - Represents the relationship between molecular agitation and temperature/energy increase indicator, showing the proportionality between the percentage of applied energy and the molecular agitation index.
Figure 2 - Represents the zero law of thermodynamics.

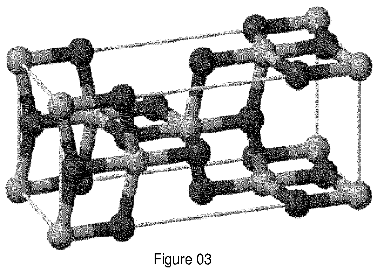

Figure 3 - Representation of the covalent dative bond in the atomic structure of a polymer of the present invention, where molecular agitation is restricted by the electromagnetic force active in the chain

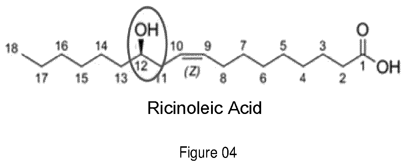

Figure 4 - Represents the fatty acid with a hydroxyl group at the 12^{th} carbon in the atomic arrangement of the valence shell.

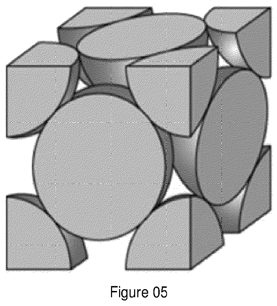

Figure 5 - Represents the face-centered cubic (FCC) unit cell.

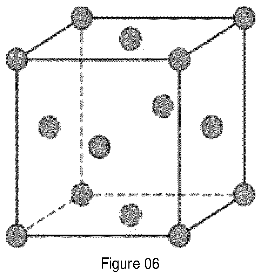

Figure 6 - Represents a face-centered cubic (FCC) crystalline structure.
Figures 7 and 7A - Represent the orthorhombic closed hexagonal packing of a face-centered cubic (FCC) structure.
Figure 8 - Represents a graph from a practical test of a container made with the additive of the present invention in one of its possible embodiments to test the temperature loss of a solid.
Figure 9 - Represents a graph from a practical test of a container made with the additive of the present invention in one of its possible embodiments to test the temperature loss of a liquid.

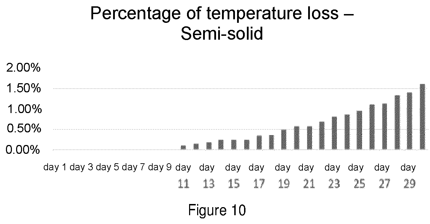

Figure 10 - Represents a graph from a practical test of a container made with the additive of the present invention in one of its possible embodiments to test the temperature loss of a semi-solid.

### Detailed Description of the Invention

Initially, it should be noted that the term "preferential" as used herein should not be understood as "mandatory" or "imperative," but rather as characterizing an embodiment of particular efficiency of the invention among the multiple possible embodiments.

Any description relating to percentages of elements/components described here whose nature is not expressly determined should be understood as being in percentage weight.

### TECHNICAL BACKGROUND

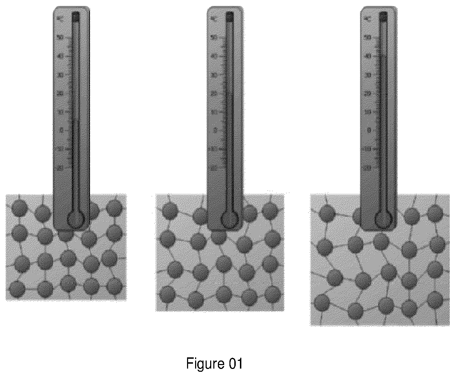

As shown in figure 1, the agitation of particles that make up a body is associated with kinetic energy, i.e., energy of movement, which is called thermal energy. Thermal energy in motion (transit), caused by the difference in temperature between two bodies, is called heat, cold or magnetic waves. The variation in the internal energy of a system can be expressed as the difference between the energy exchanged with the external environment and the work done by the system during the transformation.

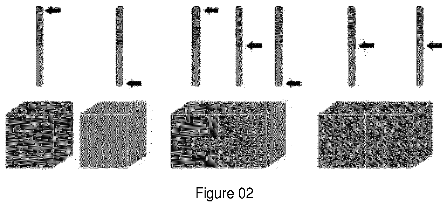

Figure 2 exemplifies the zero law of thermodynamics where, if two bodies are separately in thermal equilibrium with a third body, consequently the first two will be in thermal equilibrium with each other.

When two bodies with different temperatures come into contact, the warmer body tends to transfer heat to the colder body. This occurs so that the temperatures of both bodies equalize, and they reach thermal equilibrium. According to the Zero Law, one of the conditions for thermal equilibrium is the influence of materials that affect thermal conductivity.

There are mainly two factors that can affect the movement of particles in a medium: the charge and the size of the sample. According to the charge, negative particles migrate to the positive pole, while positive particles migrate to the negative pole. With regard to size, smaller molecules move faster than larger ones.

There are other issues that can also affect the mobility of particles, such as the concentration of the medium in which they are being separated, as well as the electrostatic retardation force.

For the sake of clarity, energy should be understood as energy from any source, such as thermal, mechanical, or sound energy, with particular emphasis on thermal energy.

As a person skilled in the art knows, the propagation of energy through a solid medium occurs through the sequential agitation of the atoms and molecules that make up that solid medium. This also occurs during the propagation of thermal energy or heat.

### ABOUT THE INVENTION

The present invention relates to an additive to be applied in the manufacture of polymeric compounds, as well as polymeric compounds that make use of the additive of the present invention.

Said additive, when applied to a polymer, confers dimensional stability, as well as preventing or substantially limiting any exchange of energy through the polymer, acting, for example, as a thermodynamic blocker, reducing the permeability of the material to gases or increasing acoustic insulation. The additive of the present invention can also be colorless or offer a light barrier, depending on the need.

Of course, a person skilled in the art is also capable of conceiving that, if desired, the additive described here can be integrated or mixed with other additives, including structural additives, in which case it can also perform a structural function in addition to the functional characteristics described here.

The additive proposed here is capable of enveloping and immobilizing the molecules that make up the solid medium (in this case, a polymer), in such a way as to prevent or substantially limit the exchange of energy through it. In addition, this immobilization also results in dimensional stability of the solid medium (polymer) in which it is applied. This effect can vary between the absence of thermal transfer or substantial limitation of thermal transfer, depending on the intended application.

This effect is made possible by the combination of a series of characteristics, resulting from the unique properties and characteristics of the additive described here, as will be detailed below.

Furthermore, the additive of the present invention has ecological characteristics, since, due to its ability to generate thermal barrier, gases and light, to numerous products of various segments of the consumer goods industry, automotive, transportation, civil, aerospace etc., the additive will provide properties to the products used replacing materials and other products, whose production process has a high environmental impact. Some examples:
- in the packaging segment, it will replace aluminum and its derivatives in the food, pharmaceutical, beverage, and other industries, significantly reducing the environmental and energy impacts generated in the production of its products;
- in the cold generation chain, whether in warehouses, national and international transportation modes, containers, etc., the additive used in packaging would eliminate the need for refrigeration in all distribution channels. In the construction industry, through films applied to fa 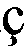 ades, it would drastically reduce the need for air conditioning units by blocking the passage of external heat or cold, fewer compressors and consequently less environmental impact caused by refrigeration units.

### EXEMPLARY EMBODIMENTS

In an embodiment, the additive proposed here comprises:
a. A fatty acid;
b. A paramagnetic component;
c. An anchoring substrate and, optionally
d. An stabilizer.

For definitional purposes only, as is known to a person skilled in the art, a fatty acid is a carboxylic acid with an aliphatic chain, which may be saturated or unsaturated.

In a preferred embodiment, the fatty acid of the present invention is any unsaturated fatty acid that contain at least one hydroxyl group (OH) present away from the ends of the carbon chain.

In a preferred embodiment, the hydroxyl group is present at the 12th carbon of the chain.

In a preferred embodiment, the fatty acid of the present invention has a 18-carbon chain.

In a more preferable embodiment, the fatty acid is derived from castor oil. Even more preferably, the fatty acid is ricinoleic acid.

Furthermore, for the sake of definition, the paramagnetic component is understood to be a component that has unpaired electrons. The paramagnetic component should be construed as a component capable of rendering the additive paramagnetic and maintaining compact hexagonal packing even under pressure and temperature variations. Additionally, said paramagnetic component generates cathodes that shield the covalent bonding and enable bonding with the nonmetals carbon and hydrogen. The use of a paramagnetic component allows its octahedral ordering sphere to structurally and functionally align the fatty acid within the additive, thereby uniformly distributing the thermodynamic blocking property.

In a preferred embodiment, the paramagnetic component is any component capable of maintaining the valence shell of the target polymeric composition or polymer with a negative charge.

In a preferred embodiment, the paramagnetic components include copper sulfate, sodium, strontium, magnesium, titanium chloride, or any of the other compounds mentioned above that are capable of performing the functionalities described herein. Based on the information disclosed in the present application, a person skilled in the art will understand that a wide variety of compounds may be used as the paramagnetic component, and therefore the present invention is not limited to the examples provided above.

An anchoring substrate is a substrate responsible for attaching the other elements of the composition to the target polymer.

As can be readily conceived by a person skilled in the art, the anchoring substrate may be solid or liquid, and may vary according to the desired final form of the product, in this case, of the additive, for example, solid (such as powder, pellet, granule or any other solid form possible for use), liquid (such as solution, dispersion, emulsion, extract, tincture or any other liquid form possible for use) or even adapted, for example, for use as a spray.

A person skilled in the art knows a wide variety of compounds that can be used as anchoring substrates and is therefore not limited by the above examples.

For illustrative purposes only, in a preferred embodiment, and considering the additive to be in a solid final form, the anchoring substrate is glycerol monostearate (GMS), Polyamide 6 (PA 6), lercite (methyl 2-methypropenoate), tetrafluoroethylene, lignin, zinc oxide, silicone fluid, tributyl citrate, and calcium carbonate.

In a preferred embodiment, the fatty acid is present in a concentration ranging from about 5% and 80% by weight, relative to the total weight of the additive (w/w). In a preferred embodiment, the fatty acid is present in any concentration between 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80% or any range encompassing the same, by weight, relative to the total weight of the additive (w/w). In an even more preferred embodiment, the fatty acid is present in a concentration between 10% and 45%, 15% and 40%, 20% and 40%, 25% and 40% or 30% and 40% by weight, relative to the total weight of the additive (w/w).

In a preferred embodiment, the paramagnetic component is present in a concentration ranging from about 1% and 30% by weight, relative to the total weight of the additive (w/w). In a preferred embodiment, the paramagnetic component is present in any concentration between 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, or any range encompassing the same, by weight, relative to the total weight of the additive (w/w). In an even more preferred embodiment, the paramagnetic component is present in a concentration between 2% and 28%, 4% and 25%, 6% and 22%, 8% and 21% or 10% and 20% by weight, relative to the total weight of the additive (w/w).

In a preferred embodiment the anchoring substrate is present in a concentration ranging from about 20% and 70% by weight, relative to the total weight of the additive (w/w). In a preferred embodiment, the anchoring substrate is present in any concentration between 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, or any range encompassing the same, by weight, relative to the total weight of the additive (w/w). In an even more preferred embodiment, the anchoring substrate is present in a concentration between 25% and 65%, 30% and 60%, 35% and 60% or 40% and 60% by weight, relative to the total weight of the additive (w/w).

### THE TECHNICAL EFFECT ACHIEVED BY THE INVENTION

The combination of these three components: fatty acid, paramagnetic component and anchoring substrate results in the effect achieved by the present invention.

More precisely, when the additive described herein is applied or incorporated into the target polymeric composition or polymer, each of the components, in particular the fatty acid and the paramagnetic component, are capable of enveloping and immobilizing the molecules of the target polymeric composition or polymer, preventing or substantially inhibiting their movement, thus conferring dimensional stability and inhibiting or limiting energy transfer, generating, for example, a thermodynamic block.

More precisely, when in contact with the polymeric composition or polymer, this additive performs a surface heterogeneous catalysis, where the hydroxyl group (OH) is responsible for donating electrons to the valence shell of the atoms of the polymeric composition or polymer, while the paramagnetic component is capable of maintaining the negative magnetic field (due to the donation of electrons by the OH group) (negative electrostatic charge).

Furthermore, the combination of the additive of the present invention with the polymeric composition or polymer results in the formation of a molecular structure of compact hexagonal packing.

As a result, there is the formation of a dative covalent bond between the valence shell atoms of the polymeric composition or polymer, which converges to the absence of molecular movement in the polymer added with the present additive, thus conferring the properties described here.

As in covalent bonds all the atoms involved have a tendency to receive electrons, they must share the electrons in the valence shell (the level furthest from the nucleus). Sharing occurs when an electron in the valence shell of one atom becomes part of the same electron cloud that surrounds another electron in the valence shell of another atom.

The anchoring component acts as a link between the molecules of the additive and the molecules of the polymeric composition or polymer.

Accordingly, in one embodiment of the invention, there is provided an additive that comprises a molecular structure with compact hexagonal packing and a negative electrostatic charge in the valence shell.

As can be seen from the above explanation, the additive described here results in a specific electronic alignment of the molecules of the target polymeric composition or polymer, achieving the desired results.

### THE AMOUNT OF ADDITIVE IN THE TARGET POLYMERIC COMPOSITION OR POLYMER

Thus, as can be readily conceived by a person skilled in the art, the amount of additive to be used will depend directly on the molecular alignment characteristics of the additive itself. Thus, a product, polymeric composition or polymer comprising said additive is also an embodiment of the present invention.

The additive, when alone (i.e. not in combination with the target polymer) already has its molecules aligned in the form of a compact hexagonal packing, a characteristic conferred by the use of the paramagnetic component.

Thus, there is a direct relationship between the packing percentage of the additive and the concentration needed to achieve the desired electronic alignment in the target polymeric composition or polymer.

For this reason, this property applies to a wide range of materials which, when given the additive in the right proportions, guarantee the desired gas, light and temperature barrier properties.

In one embodiment, the polymeric composition or polymer may be selected from Nylon, Kevlar, vinyl acetate polymer, polycarbonate (PVA), polymethyl methacrylate (PMMA), polyvinyl chloride (PVC), acetal (POM), polytetrafluoroethylene (PTFE), polyester, polyurethane, Celeron, phenolic, low-density polyethylene, high-density polyethylene, polypropylene and other.

More specifically, it was observed that the additive containing at least 52% de compact hexagonal packing is already capable of providing to the target polymer o electronic alignment required for functioning. Thus, additives having 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99% or 100%, or any intervals comprised within these values, of compact hexagonal packing then within the specification of the present invention. In a preferred embodiment, the additive contain at least 70%, preferably 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99% or 100% of compact hexagonal packing, an embodiment in which the additive is capable of providing up to 100% de electronic alignment to the target polymer.

It is important to note that the higher the percentage by weight of the additive used in the target polymeric composition or polymer, the greater the energy blocking result. In this sense, notwithstanding the exemplary values suggested above, the additive can be understood in the target polymeric composition or polymer between above 0% and up to 16%. In a preferred embodiment, the additive of the present invention is present in any concentration between 0.001%, 0,1%, 0.5, 1%, 2%, 3%, 4%, 5%, 6% 7%, 8%, 9%, 10%, 11%, 12%, 13%, 14%, 15%, 16%, or any range encompassing the same, by weight, relative to the total weight of the polymeric composition (w/w). The difference in the energy barrier to be obtained will depend on the amount added. The greater the amount added, the greater the barrier obtained. Naturally, it is possible to add a value greater than that which guarantees, for example, maximum thermodynamic blockage, depending only on a selection which is therefore not limiting. The difference in the energy barrier to be obtained will depend on the amount added. The greater the amount added, the greater the barrier obtained. Naturally, it is possible to add a value greater than that which guarantees, for example, maximum thermodynamic blockage, depending only on a selection which is therefore not limiting.

At this concentration, the target polymeric composition or polymer has both dimensional stability and energy transfer barrier (impediment or limitation) properties.

If the focus is on dimensional stability, i.e., energy exchange, albeit limited, concentrations starting at about 4% of the weight of the additive, in relation to the final weight of the polymeric composition or polymer, are acceptable and sufficient.

Of course, the use of lower concentrations of additive, or additives with a lower degree of packing, also confer a certain degree of dimensional stability and limit energy exchange, but with less efficiency.

Furthermore, as a person skilled in the art can conceive, in the case of additives with a lower degree of packing, higher concentrations of additives can be used in a linear relationship to achieve the desired results. However, this is not a preferred alternative, as it tends to increase the costs with the additive and, consequently, increase the value of the final polymer.

Through a theoretical model, it is possible to conceive that the additive will be capable of achieving the desired effect (depending on its concentration) if the atomic packing factor (or APF) is at least 50%, preferably between 53% and 80%, more preferably 74% or higher, and even more preferably 76% or higher of compact hexagonal packing.

It is important to emphasize that this additive is a functional additive, which does not alter the characteristics of the target polymeric composition or polymer, such as melting point, flame resistance, and so on, but only confers dimensional stability and impedes or limits energy transfer on the theoretical basis explained above. Of course, there is nothing to prevent interference with the characteristics if so desired, and it is only necessary for the person skilled in the art to adjust the chemical composition or mix other additives for this purpose.

Thus, the present additive can be incorporated into a polymeric composition or polymer in various ways, for example, during its manufacturing process (such as during injection, molding, melting, extrusion, lamination, among others) or even afterward, through surface application, for example, by means of a spray, paint, film, coating layer, etc.

Also, in the event that the additive is incorporated during the production line of the polymeric composition or polymer, it can be directly added during any stage of the same, without the need to modify equipment or production processes.

### OTHER EMBODIMENTS - ADDITIONAL COMPONENTS

In an alternative embodiment, additional components can be added to the additive in order to make adjustments, for example, to its coloration, assigning color, translucency or even light-blocking characteristics to the additive and thereby transferring this property to the polymeric composition to which it is incorporated.

Given the components used, the additive may have a whitish appearance, which may affect the final appearance of the polymeric composition or polymer, for example in the case of transparent products. Therefore, components to adjust the coloration can be used, for example, functional stabilizers, such as magnesium chloride, in sufficient concentrations to achieve the desired effect.

In a preferred embodiment, the functional stabilizer is present in a concentration ranging from about 5% and 40% by weight, relative to the total weight of the additive (w/w). In a preferred embodiment, the functional stabilizer is present in any concentration between 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40% or any range encompassing the same, by weight, relative to the total weight of the additive (w/w). In an even more preferred embodiment, the functional stabilizer is present in a concentration between 7% and 35%, 10% and 33%, 12% and 31%, 15% and 30% or 15% and 25% by weight, relative to the total weight of the additive (w/w).

### THE PROCESS FOR OBTAINING THE ADDITIVE

A process for preparing said additive is also described herein..

Given that the additive possesses specific molecular and electrostatic characteristics, a person skilled in the art will understand that the mere mixing of the final components identified above is insufficient to produce the effects achieved by the additive as described.

The process described here comprises the steps of:
a. Obtaining a mixture of fatty acid with a solvent to obtain a fatty acid with low entropy, when compared to the entropy of the fatty acid in its natural state;
b. Obtaining a mixture containing the mixture of item (a) with the paramagnetic component to obtain the molecular structure of compact hexagonal packing and a negative electrostatic charge in the valence shell of the polymer molecules; and
c. Obtaining a mixture containing the mixture of item (b) with the anchoring substrate to form the fixation carrier to the target polymer.

For the purposes of this document, the terms 'obtain' or 'obtaining' refer to a step in which the mentioned mixtures are acquired either through the combination of the specific components or by purchasing/acquiring the mixtures already prepared.

Moreover, in a preferred embodiment, the paramagnetic component may be mixed with the anchoring substrate before the incorporation into the mixture obtained in item (a). This mixture aims to dilute the natural color of the paramagnetic component, for example in the case of titanium chloride, which is purplish. Naturally, if the final color of the additive has no impact on the end product (for example, in the case of a dark-colored polymer), this step is not necessary, but if you want a translucent polymer, such as a transparent film, it is important.

In a preferred embodiment, the process can also include the additional step of:
a. Incorporating into the mixture obtained in the step (c) additional components, such as functional stabilizers, to adjust the final aesthetic characteristics of the additive (such as coloration).

The particularities and parameters of each of the steps described here are known to a person skilled in the art, who is capable of reproducing the present process without the need for undue experimentation, since the objectives of each of the steps are clearly described.

Furthermore, the procedures for carrying out these steps to achieve the intended effects are well within the knowledge of a person skilled in the art, and therefore do not require further detailed discussion herein.

Solvents generally have a high evaporation rate. Thus, the solvent used in step (a) is spontaneously evaporated in the subsequent steps of the process described here and therefore does not form part of the final composition of the additive obtained.

As explained above, the solvent has the function of reducing entropy, which happens through the organization of the fatty acid molecules. In addition, the solvent is also useful for reducing the strength of the fatty acid, thus helping in the other stages of the process.

In a preferred embodiment, the fatty acid-to-solvent ratio used in step (a) of the process is within a range of about 0.5:2 to about 4:0.5. In a more preferred embodiment, said ratio is within the range of about 1:1.5 to about 3:1.5, about 1:1 to about 3: 1, or about 1:1 to about 2:1.

In a more preferable embodiment, the solvent is selected from cyclohexanone, Ethoxyethanol, Methyl Acetate, ethyl acetate and sodium acetate trihydrate. Even more preferably, the solvent is ethyl acetate, sodium acetate trihydrate, or an equivalent.

In another preferred embodiment, the fixation carrier é selected from Polyamide 6 (PA 6), carboxylic acid, ethyl acetate, lercite, methyl 2-methylpropenoate, acetylsalicylic acid, tetrafluoroethylene, lignin, zinc oxide, and glycerol monostearate (GMS).

The concentration of the other components can be readily inferred by a person skilled in the art from their final concentration in the additive as described above.

Thus, an additive obtainable or obtained by the process as described above is also an embodiment encompassed herein.

The additive described here can be incorporated into any polymeric composition or polymer, such as Nylon, Kevlar, vinyl acetate polymer, polycarbonate (PVA), polymethyl methacrylate (PMMA), polyvinyl chloride (PVC), acetal (POM), polytetrafluoroethylene (PTFE), polyester, polyurethane, Celeron, phenolic, low-density polyethylene, high-density polyethylene, polypropylene, and other, in particular any polymer or polymeric composition derived from polyethylene (PE) or polypropylene (PP). Since the characteristics of dimensional stability and impediment or limitation of energy exchange are given by the final structural and electronic arrangement of the combination of the polymer with the additive described herein, the person skilled in the art is readily able to design the polymers and polymeric compositions into which the additive can be added.

By way of example and not limitation of the present invention, Table 1 below shows materials containing the additives claimed herein.

**Table 1: Examples of materials and their additives**

| **Polymer** | **Base** | **Solvent** | **Carrier** | **Reagent** | **Enthalpy former** | **Stabilizer** |
|---|---|---|---|---|---|---|
| Nylon | Castor oil (30%) | Cyclohexanone (15%) outro | Polyamide 6(PA 6) (30%) other | Sodium Benzoate (5%) other | Methylene Chloride (10%) | N-octylpyrrolidone (10%) |
| Kevlar | Castor oil (30%) | Ethoxyethanol (22%) | Carboxylic acid (30%) | Nonylphenol Ethoxylate (8%) | Polytetrahydrofuran - PTHF (1000/2000) (5%) | Butylated hydroxytoluene (5%) |
| Polyvinyl Acetate | Castor oil (30%) | Cyclohexanone (12%) | Ethyl acetate (35%) | Dioctyl Adipate (13%) | Polytetramethylene ether glycol (5%) | Methylparaben (5%) |
| Polycarbonate (PVA) | Castor oil (30%) | Cyclohexanone (12%) | Ethyl acetate (8%) | Glycerol monostearate (GMS) (20%) | Polytetramethylene ether glycol (20%) | Methylparaben (10%) |
| Polymethyl methacrylate (PMMA) | Castor oil (30%) | Ethoxyethanol (15%) | Lercite (30%) | Polyethylene Glycol 600 (5%) | Polytetramethylene ether glycol (10%) | Sodium bisulfite (10%) |
| PVC | Castor oil (30%) | Methyl Acetate (14%) | Metil 2-metilpropenoat o (30%) | Zinc oxide (6%) | Butanediol (10%) | Sodium stannate (10%) |
| Acetal (POM) | Castor oil (30%) | Methyl Acetate (15%) | Acetylsalicylic acid (30%) | Silicone fluid 1000 (10%) | Sodium nitrite (5%) | Alkaline zinc (10%) |
| PTFE | Castor oil (30%) | Cyclohexanone (14%) | Tetrafluoroeth ylene (30%) | Tributyl citrate - TBC (6%) | Sodium nitrite (10%) | Alkaline zinc (10%) |
| Paper | Castor oil (30%) | Ethoxyethanol | Lignin | Hydrogen peroxide | Sodium nitrate | Alkaline zinc (10%) |
| Polyester | Castor oil (30%) | Ethyl acetate | Zinc oxide (6%) | Sodium acetate (14%) | Potassium chloride (25%) | Methylparaben (25%) |
| Polyurethane | Castor oil (30%) | Ethyl acetate | Glycerol monostearate (GMS) (20%) | Tributyl citrate - TBC (6%) | Polytetramethylene ether glycol (5%) | Methylparaben (10%) |
| Celeron | Castor oil | Ethyl acetate | Calcium Carbonate | Ethyl benzene | Glycol ether | Methylparaben |
| Phenolic | Castor oil | Ethyl acetate | Calcium Carbonate | Zinc oxide (30%) | Butanediol | Alkaline zinc |

### EXAMPLES DE APPLICATIONS AND ADVANTAGES

In a preferred embodiment, said additive is for use as an additive component in a polymeric composition or polymer.

As mentioned above, the purpose of using said additive is to provide dimensional stability and prevent or limit energy transfer. However, despite focusing primarily on dimensional stability and preventing or limiting the transfer of energy, especially heat or cold, given the characteristics obtained, it is also possible to conceive that the present additive can be used as a sound barrier, by the same principles already explained above (immobilization of the polymer molecules added with the additive of the present invention).

The most evident practical applications of the resulting compound can be observed in its use for manufacturing a wide range of items, including but not limited to packaging for food preservation, perishable goods, automotive parts and films, conductor and semiconductor coatings, general electronics, household appliances, construction materials, aerospace components, textiles, motorcycle accessories, clothing, paints, varnishes, medical materials and equipment, tents, coolers, optics (such as visors and glasses), and more specialized applications such as containers for medical items, organ transportation, and similar uses.

Other applications may involve articles or products for the construction industry, where the thermodynamic insulation characteristic of the article is required. In such cases, the polymeric compound may prove to be substantially more advantageous from both an economic and environmental perspective compared to traditionally used materials. Another potential application is in the automotive industry, where multiple components could benefit from the dimensional and thermodynamic stability characteristics of the compound.

Other non-exhaustive examples of applications or products include: containers for solids and liquids (bottles, jars, etc.), the textile industry, medical equipment, soundproofing equipment, machine parts in general, coatings for application in products and equipment (whether in the form of spray or pre-molded layers), paints, varnishes, films, laminated layers, deposited coatings on surfaces or in sandwich structures, food packaging, bottles, yogurt containers, ice cream tubs, thermal bottles, thermal bags, cans coated with film, pharmaceutical packaging, blisters for packing tablets in the pharmaceutical industry, vaccine vials, containers for transporting organs, boxed liquid packaging, ice bags, food films, hydraulic pipes, oil and gas pipelines, construction paints, films and coatings for various applications, textiles, automotive plastics, solar panels, tires, and any polymeric solution aimed at improving dimensional stability, enhancing thermodynamic insulation, improving temperature insulation, increasing gas impermeability, or boosting sound insulation.

Considering that this is a thermal blocker, its application ranges from reducing energy consumption in refrigeration and heating systems to minimizing the generation of high-impact materials such as aluminum, and reducing the carbon footprint, among other environmental benefits.

This invention enables a product, for example, to be packaged frozen and remain so without the need for refrigeration. It is possible for items like ice cream or yogurt to be sold on regular supermarket shelves, without refrigeration. Similarly, ice can be sold in a bag on a regular shelf without refrigeration. This applies to countless other products, such as butter, whipped cream, margarines, fish, meat, vegetables, and others. Such a solution allows for the preservation of these products until they are removed from their packaging, and this preservation capability can be maintained if the packaging allows for reuse.

A carton packaging according to the present invention can be defined as packaging for liquids, semi-solids, or ready-to-eat foods (such as chickpeas, beans, corn, peas), comprising a cardboard layer, and additionally, an outer layer of polyethylene outside the cardboard layer, and at least one inner layer of polyethylene inside the cardboard layer. The outer polyethylene layer and/or the at least one inner polyethylene layer contain a valence shell with a dative bond, heterogeneous surface catalysis, and compact hexagonal packing. The thickness of the polyethylene layers containing the additive of the present invention can range from 0.1 nanometers to 3 mm.

On the other hand, it is possible to drastically reduce the energy spent on refrigerating food during transportation. This is because they can be packaged with the technology of the present invention, or even the refrigerated vehicle will use less energy to keep the environment refrigerated since it can be thermally insulated with the material of the present invention. An increase in temperature would not occur, or practically would not occur, through the side walls, only through the opening and closing of the refrigerated chamber. The same applies to a conventional fridge, freezer or oven, which will be much more energy efficient.

The present invention can also be applied to heat-resistant gloves, fabrics, clothing, sleeping bags, thermal bottles or cups, coolers, lunch boxes, tents, tarpaulins in general, such as truck tarpaulins, to guarantee a desired temperature or thermal comfort.

Naturally, the present invention can be applied to household appliances, ovens, stoves, both interior and exterior vehicle components (such as paints, window films, and wrapping), electrical components, ships, trains, and in the fields of aviation, aerospace, and general industries. It is also applicable to industrial refrigeration systems (such as cold water systems), air conditioning (equipment and pipes), and heated air systems (such as heat pumps, etc.).

In building construction, the benefits are immense, as it is possible to significantly reduce energy consumption through the use of paint, films, or coatings applied to windows, facades, roofing, and hot or cold piping systems. This enables more efficient buildings with a lower environmental impact. Additionally, in building construction, it is possible to spend less on heating or cooling due to a substantial reduction in energy transfer through the material, minimizing heat loss or gain. In other words, thermal loss is blocked. For example, in hot water pipes, it is possible to maintain the water temperature for a long time after the bath, preventing waste of water and energy used for heating.

For example, a soft drink or beer can be packaged frozen in a plastic bottle containing the additive of the present invention, such as a PET bottle, and remain cold for weeks or even months without the need for refrigeration. Alternatively, a conventional packaging can be cooled and then coated with a film or spray layer containing the product of the present invention, ensuring it stays cold over time. Another option would be, for example, an aluminum can coated internally and/or externally with a film containing the additive of the present invention, designed to keep beverages like beer, juices, soft drinks, soups, dairy products, teas, and others cold or hot as needed for each application. In short, it is possible to enjoy a cold beer at the beach, even if it was packaged weeks before production.

The opposite is also possible, meaning that an item can be packaged hot and maintain its temperature without significant thermal loss or with minimal loss. This is especially important for applications such as fast food packaging, food deliveries, take-out containers, etc.

In one possible configuration, the additive can be used in packaging to increase or ensure the shelf life of its products. For example, a beverage can be packaged while frozen and maintained at the desired temperature. The opposite is also possible, meaning that a product or liquid can be packaged at a high temperature and maintained at that temperature until its opening.

In a sealed packaging with a polymer additive as described in the present invention, the temperature increase was below 2%. In some tested cases, the temperature increase was less than 1% over 20 days, due to the need to open the packaging for measurement. Naturally, this effect can be controlled by adjusting the amount of the additive in the final polymeric composition, as previously explained.

In one possible embodiment, a product and/or packaging can be conceived, for example, comprising a polymeric layer containing the additive of the present invention, laminated with a cardboard layer (e.g., cellulose-based). In this case, the polymeric layer is applied to the inner face of the cardboard, without the need for an aluminum layer, which would otherwise hinder or eliminate the light and oxygen barrier function. In this manner, the present invention ensures food preservation more efficiently than those using aluminum, providing superior gas, thermal, and light protection, while also avoiding the negative environmental impact associated with aluminum use, both in terms of extraction and the difficulty of recycling when extruded into paper and polyethylene. Additionally, it offers process advantages, as it simplifies the use of just cardboard and polymeric layers.

In another technical solution, the present invention enables a significant reduction in the refrigeration chain, as refrigerators and freezers can incorporate the additive into the polymer expanded in their walls and doors, or through additional layers of paint and/or films applied to their exterior. This allows the cold to be contained in a highly efficient manner, requiring thinner insulation walls compared to current solutions.

In the opposite scenario, the application in ovens, stoves, gas or charcoal grills, or other heat sources could prevent heat loss through the application of the present invention's technology, while also reducing the thickness of the insulation walls, thereby offering more internal space. It is important to note that a polymer, such as polypropylene or polyethylene, incorporating the additive of the present invention, retains the same melting point as the polymer without the additive. In other words, while the melting point remains unchanged, in the present invention, the material maintains its dimensional stability up to the melting point, at which point it collapses. This is a particularly valuable characteristic, as it enables the material to function as a flame retardant or blocker up to its melting temperature. This application is highly relevant for cables or electrical components, as well as paints or coatings for building construction. To further enhance this capability, the additive of the present invention can be combined with a polymer composition based on PTFE to further delay or prevent a fire due to PTFE's higher melting temperature.

In another scenario, homes, vehicles, coolers, display racks, etc., can be coated, and windows can receive layers to prevent internal temperature fluctuations, resulting in significant energy savings and contributing to solving one of the major challenges facing humanity today: the environmental impact caused by excessive energy consumption.

Hot water pipes in residential buildings, for example, can be constructed using the solution of the present invention to prevent the waste of heated water that would otherwise cool down in the pipes until the next hot shower. This results in savings of both water and energy.

Polymeric fibers that incorporate the present invention will have thermal properties, such as nylon, for example, enabling the production of fabrics, clothing, and footwear. A camping tent would no longer heat up its interior, even under a scorching sun of, for instance, 40°C. A thermos bottle will have the ability to maintain the temperature of its contents, whether cold or hot, for much longer periods during use, thanks to the thermal barrier applied.

Coatings requiring high-temperature resistance can incorporate, for example, Teflon with the additive of the present invention, making it possible to apply it to motorcycle exhaust systems to prevent heat transfer and accidents caused by burns.

Materials where optical function is important, such as a helmet visor, can prevent energy transfer between their external and internal surfaces, thereby eliminating fogging due to the absence of condensation. Coatings and layers can be applied to lenses for this purpose.

Ice bags can be sold in supermarkets on shelves without the need for refrigeration, and food can be packaged without requiring a cold chain or with significantly reduced usage of it.

A practical result of using the additive of the present invention is the absence or substantial limitation of the condensation effect that occurs on the surfaces of products, containers, or packaging whose contents are at temperatures lower than the ambient temperature. Due to the thermal barrier created by the functional additive proposed herein, there is no effective transfer of energy throughout the structure of the compound, meaning that it does not heat up or cool down according to the temperature of the item inside the container, thus preventing condensation on its surface. This effect is convenient and beneficial for a wide range of commercial and industrial applications.

It is worth noting that the functional additive in question can be used to obtain polymeric compositions such as paints and varnishes, which can be applied in the aforementioned applications to form a layer on a surface, thereby imparting to a product or part of a product the dimensional and thermodynamic stability characteristics achieved through the use of the additive.

The functional additive in question may also be used to obtain compounds that will form parts of products, such as components, plates, surfaces, or layers, which will subsequently be used for the manufacture of final products. Furthermore, the present additive can give rise to compounds intended for the formation of multilayer surfaces, for example, in external, internal, and/or intermediate layers of a surface, either in a 'sandwich' configuration or otherwise.

It is also important to note that the present additive has ecological appeal. Firstly, due to the possibility of using a natural fatty acid derived from castor oil (30%), such as ricinoleic acid. The use of synthetic additives or petroleum-derived compounds in polymer additives is common, but this is not a necessity for the present invention.

Furthermore, given its dimensional stability and its ability to limit or prevent energy exchanges, the polymeric composition or polymer additive described herein can be used in applications that currently require significant energy consumption, such as cooling systems. Due to the characteristics imparted by the present additive, any chamber or space coated with a polymeric composition or polymer containing the additive proposed here will require substantially less energy to be cooled, in addition to maintaining the cooling effect for a significantly longer period.

### LABORATORY TESTING

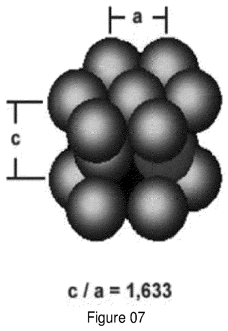

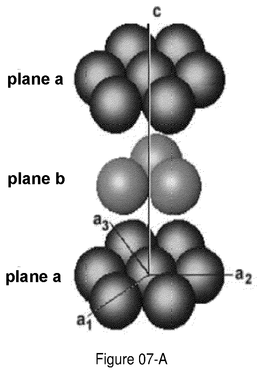

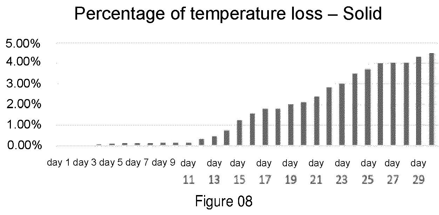

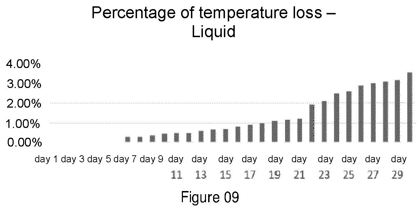

The tests shown in Figures 7, 8 and 9 have been carried out on thermoformed polyethylene jars (base and lid) with the additive of the present invention, applying a percentage by weight of the additive greater than 5%, in order to achieve thermodynamic blocking, i.e. temperature blocking close to 100%.

In this context, solids, liquids, and semi-solids have been placed in separate containers and kept at the same temperature, 20°C below room temperature. A thermometer was also placed inside each container to allow for daily temperature measurement.

The measurements have been taken at controlled times and to obtain the reading, the jars were opened, the reading taken and then immediately closed.

In conclusion, it is clear that the additive of the present invention offers the polymeric compounds with which it is associated a thermodynamic block never before detected in polymeric materials.

For the semi-solid content, the loss of temperature or energy over 30 days was 1.59%, while for the liquid content the loss was 3.6% and for the solid content it was 4.5% over the same 30 days.

The differences found can be explained by the time taken to open the lids to measure the temperature, by the fact that the thermal exchange with the external atmosphere is greater with a solid, among others. On average, results were obtained with a temperature loss of around 0.05% per day (every 24 hours).

In turn, the same polyethylene polymeric composition without the addition of the additive of the present invention has a temperature loss of around 48% per day. In other words, in a practical test, the solution of the present invention performed more than 900 times better than the state of the art in terms of thermodynamic resistance or resistance to temperature loss inside the pot.

For a test carried out without opening the lids, it is estimated that the temperature loss is even lower, and could be as low as 0.01, or even 0.001 per day, if not less.

Thus, the present invention offers a solution that guarantees the possibility of maintaining, for example, a cooled or heated state, guaranteeing a greater gas barrier, among others, it offers a reduction in energy consumption, having an absolute impact on the reduction of CO² consumption, an environmental benefit so high that there are situations that will have energy savings of more than 50%, 60%, 70%, 80%, or even 90%.

### IDENTIFICATION OF THE INVENTION IN A POLYMERIC COMPOSITION, POLYMER, OR PRODUCT

In a preferred embodiment, said product, polymeric composition, or polymer is any product, polymeric composition, or polymer comprising at least one portion having a molecular structure with compact hexagonal packing and a dative layer (negative electrostatic charge in the valence shell), as a result of the addition of the additive described herein. In other words, it is possible to identify the technology of the present invention-namely, the presence of compact hexagonal packing and surface heterogeneous catalysis-by means of scanning microscopy.

Thus, the present invention produces a pyrolysis that forms the carbonaceous layer with a negative electromagnetic surface, and the bonds are covalent in the atomic structure, which inhibits atomic molecular agitation. In other words, the covalent bonds make the packing factor more compact, limiting energy penetration.

Since examples of preferred embodiments have been described, it should be understood that the scope of the present invention covers other possible variations, and is limited only by the content of the attached claims, including possible equivalents.

## Claims

1. Additive **characterized in that** it comprises:
- a fatty acid;
- a paramagnetic component; and
- an anchoring substrate.

2. Additive, in accordance with claim 1, **characterized in that** the fatty acid is present in a concentration around 5% to around 80% by weight, relative to the total weight of the additive.

3. Additive, according to any of the preceding claims, **characterized in that** the fatty acid é an unsaturated fatty acid that contains at least one hydroxyl group (OH) present away from the ends of the carbon chain.

4. Additive, according to any of the preceding claims, **characterized in that** the fatty acid has a hydroxyl group on the 12th carbon of the chain, preferably, wherein the fatty acid has an 18-carbon chain, more preferably, wherein the fatty acid is derived from castor oil, and even more preferably, wherein the fatty acid is ricinoleic acid.

5. Additive, according to any of the preceding claims, **characterized in that** the paramagnetic component is present in a concentration of about 1% to about 30% by weight, relative to the total weight of the additive.

6. Additive, according to any of the preceding claims, **characterized in that** the paramagnetic component is any component capable of maintaining the valence shell of the target polymeric composition or polymer, with a negative charge.

7. Additive, according to any of the preceding claims, **characterized in that** the paramagnetic component é selected from copper sulfate, sodium, strontium, magnesium, and titanium chloride, preferably wherein the paramagnetic component is titanium chloride.

8. Additive, according to any of the preceding claims, **characterized in that** the anchoring substrate is present in a concentration of about 20% to about 70% by weight, relative to the total weight of the additive.

9. Additive, according to any of the preceding claims, **characterized in that** the anchoring substrate is a solid or liquid anchoring substrate selected from glycerol monostearate (GMS), Polyamide 6 (PA 6), lercite (methyl 2-methypropenoate), tetrafluoroethylene, lignin, zinc oxide, silicone fluid, tributyl citrate, and calcium carbonate.

10. Additive, according to any of the preceding claims, **characterized in that** the anchoring substrate is a solid anchoring substrate.

11. Additive, according to any of the preceding claims, **characterized in that** the solid anchoring substrate is calcium carbonate.

12. Additive, according to any of the preceding claims, **characterized in that** it comprises, additionally, functional stabilizers, preferably magnesium chloride.

13. Additive, according to any of the preceding claims, **characterized in that** the functional stabilizer is present in a concentration of about 5% to about 40% by weight, relative to the total weight of the additive.

14. Additive, according to any of the preceding claims, **characterized in that** it comprises a molecular structure with compact hexagonal packing and a negative electrostatic charge in the valence shell.

15. Additive, according to any of the preceding claims, **characterized in that** it is for the addition of a polymeric composition or polymer.

16. Additive, according to any of the preceding claims, **characterized in that** a polymeric composition or polymer é selected from Nylon, Kevlar, vinyl acetate polymer, polycarbonate (PVA), polymethyl methacrylate (PMMA), polyvinyl chloride (PVC), acetal (POM), polytetrafluoroethylene (PTFE), paper and cellulose, polyester, polyurethane, Celeron, and phenolic, low-density polyethylene, high-density polyethylene, polypropylene.

17. Process for obtaining an additive as defined in any one of claims 1 a 16, **characterized in that** it comprises the following steps:
a. obtaining a mixture of fatty acid with a solvent to obtain a fatty acid with low entropy;
b. obtaining a mixture containing the mixture of item (a) with the paramagnetic component, to obtain the molecular structure of compact hexagonal packing and a negative electrostatic charge in the valence shell of the polymer molecules; and
c. obtaining a mixture containing the mixture of item (b) with the anchoring substrate to form the fixation carrier to the target polymer.

18. Process, in accordance with claim 17, **characterized in that** it comprises the additional step of mixing the paramagnetic component with an anchoring substrate before the incorporation into the mixture obtained in item (a).

19. Process, in accordance with claim 17 or 18, **characterized in that** it comprises, additionally, the step of:
a. incorporating into the mixture obtained in the step (c) additional components, such as functional stabilizers, to adjust the final aesthetic characteristics of the additive (such as coloration).

20. Process, according to any claims 17 to 19, **characterized in that** the ratio fatty acid:solvent used in step (a) of the process is within about 0.5:2 to 4:0.5.

21. Process, according to any claims 17 to 20, **characterized in that** the solvent is selected from cyclohexanone, Ethoxyethanol, Methyl Acetate, ethyl acetate and sodium acetate trihydrate, or their mixtures .

22. Process, according to any claims 17 to 21, **characterized in that** the solvent is ethyl acetate.

23. Process, according to any claims 17 to 22, **characterized in that** the functional stabilizer is magnesium chloride.

24. Process, according to any claims 17 to 23, **characterized in that** the fixation carrier é selected from Polyamide 6 (PA 6), carboxylic acid, ethyl acetate, lercite, methyl 2-methylpropenoate, acetylsalicylic acid, tetrafluoroethylene, lignin, zinc oxide, and glycerol monostearate (GMS).

25. Additive **characterized in that** it is obtainable or obtained by the process as defined in any one of claims 17 to 24.

26. Additive, according to any of the claims 1 to 16 or 25, **characterized in that** it is for use in a polymeric composition or polymer.

27. Use of an additive as defined in any one of claims 1 a 16 or 25, **characterized in that** it is a polymeric composition or polymer.

28. Product, **characterized in that** it comprises the additive as defined in any one of claims 1 to 16 or 25.

29. Product, **characterized in that** it comprises at least one portion having a molecular structure with compact hexagonal packing and a negative electrostatic charge in the valence shell..

30. Polymeric composition or polymer **characterized in that** it comprises the additive as defined in any one of claims 1 to 16 or 25.

31. Polymeric composition or polymer **characterized in that** the additive is comprised in the target polymeric composition or polymer, between above 0.001% and 16%, by weight, relative to the total weight of the polymeric composition (w/w).

32. Polymeric composition or polymer **characterized in that** it comprises at least one portion endowed with a molecular structure, exhibiting compact hexagonal packing, and heterogeneous surface catalysis.

33. Material **characterized in that** it comprises at least one portion simultaneously endowed with a dative valence layer and heterogeneous surface catalysis.

34. Material in accordance with claim 33, **characterized in that** it is selected from Nylon, Kevlar, vinyl acetate polymer, polycarbonate (PVA), polymethyl methacrylate (PMMA), polyvinyl chloride (PVC), acetal (POM), polytetrafluoroethylene (PTFE), polyester, polyurethane, Celeron, phenolic low-density polyethylene, high-density polyethylene, and polypropylene, and is added with additive as defined in any one of claims 1 to 16 or 25.
